# EUROPEAN PATENT APPLICATION

(11) **EP 3 020 789 A1**
(43) Date of publication of application: **18.05.2016**
(21) Application number: 14813211.1
(22) Date of filing: 23.06.2014
(51) Int. Cl.: C10L 3/06, C25B 1/00, C25B 1/04

(54) **METHOD FOR PRODUCING COMBUSTIBLE GAS FROM CARBON DIOXIDE AND HYDROXYGEN GAS**

(30) Priority: 21.06.2013 JP 2013130905
(71) Applicant: Japan Techno Co., Ltd, Ota-ku Tokyo 146-0085 (JP)
(72) Inventor: OMASA Ryushin, Fujisawa-shi Kanagawa 251-0033 (JP)
(74) Representative: Klocke, Peter
(86) International application number: PCT/JP2014/066551
(87) International publication number: WO 2014/204011

(57) **Abstract**

A new combustible gas is produced by reacting a gas mixture consisting of 90%-10% of carbon dioxide and 10%-90% of OHMASA-GAS under a pressure of 0.1MPa-10MPa at a temperature of 5°C-50°C.

## Description

### Field of the Invention

The present invention relates to a method for producing combustible gas by reacting carbon dioxide with oxy-hydrogen gas generated from water.

### Related Background Art

Nowadays carbon dioxide is nominated as the most influential factor of the global warming. However, since there are no effective methods to prevent the carbon dioxide from increasing and no effective industrial measures and technical methods to convert the carbon dioxide into other reusable compounds, concentration of the carbon oxide on the earth has been more and more increasing as the world economy has been developed. Adverse effects on the global environment caused by the increasing carbon dioxide are far beyond our imagination. Crises which jeopardize human lives, for example, such as abnormal weathers caused by atmospheric warming, high tides caused by ocean currents flow changes, adverse effects on ecological systems, draughts and floods, submerged lands by seal level rises, food shortages caused by law yields of agricultural products and so forth, are too many to enumerate. Therefore it is an urgent issue to keep the carbon dioxide from increasing by reusing the carbon dioxide.

The inventor (OHMASA, Ryushin) already succeeded in obtaining oxy-hydrogen combined gas, which is safe and different from conventional oxy-hydrogen gas, by electrolyzing water under specialized vibratory agitations (hereinafter the oxy-hydrogen combined gas by the inventor is called as "OHMASA-GAS" in order to distinguish from the conventional oxy-hydrogen gas). During the electrolysis, nano-micro bubbles (fine bubbles formed by oxygen and hydrogen) are generated by vibratory agitations, and the generated nano-micro bubbles burst, as a result the burst bubbles converted into the oxy-hydrogen combined gas (see patent references 1-3). Since this combined gas contains H₂O clusters (see non-patent reference 1), it is confirmed that the combined gas does not explode so that it is safe, while the conventional oxy-hydrogen gas tends to explode.

The inventor confirmed a fact that when the OHMASA-GAS is used in welding, fusing, brazing or the like, it is possible to reduce costs by 60-70% compared with cases where acetylene or propane gas is used (see patent references 2, 3). And it is reported that when power is generated by a gas mixture consisting of 50% of OHMASA-GAS and 50 % of LP gas, costs are reduced to almost half compared with 100% of LP gas, and additional investment is required little (see non-patent reference 1).

### Reference List of Prior Art

### Patent Reference

1. Japanese patent No. 3975467
2. Japanese patent No. 4076953
3. Japanese patent No. 4599387

### Non-patent reference

1: <URL: http://www.ohmasa-gas.org/01project.html> [Searched on May 15, 2013]

### Summary of the Invention

### Problems to be Solved by the Invention

An objective of the present invention is to produce a new fuel gas by specially combining the OHMASA-GAS and carbon dioxide, in view of the above-mentioned unique properties of OHMASA-GAS.

### Means to Solve the Problem

The problem mentioned above is solved by one of constituent features (1)-(9).
(1) A method for producing a combustible gas by reacting carbon dioxide and OHMASA-GAS with a predetermined mixing ratio under a predetermined pressure at a predetermined temperature.
(2) The method for producing the combustible gas according to (1), wherein the pressure is set in a range of 0.1MPa-10MPa.
(3) The method for producing the combustible gas according to (1), wherein the temperature is set in a rage of 5°C-50°C
(4) The method for producing the combustible gas according to (1), wherein the mixing ratio is set in a range of 90%-10% of carbon dioxide and in a range of 10%-90% of OHMASA-GAS.
(5) A system for recycling carbon dioxide generated by combusting the combustible gas produced by the method specified in one of (1)-(4) in producing the combustible gas specified in one of(1)-(4).
(6) A new combustible gas obtained by mixing the combustible gas specified in one of (1)-(4) with a fossil fuel consisting of propane and methane with an optional mixing ratio.
(7) A system comprising an OHMASA-GAS production apparatus and a mixing tank, wherein: the mixing tank receives OHMASA-GAS from the apparatus and 10-50% of exhaust gas from gas combustion machines outside, and therein the new fuel gas can be synthesized by reacting carbon dioxide and OHMASA-GAS.
(8) A system for synthesizing a combustible gas by blowing carbon dioxide directly onto platinum electrodes in electrolysis vessels of an OAMASA-GAS production apparatus.
(9) A system for producing a new fuel gas, wherein: a combustible gas or a mixture gas consisting of the combustible gas and OHMASA-GAS is combusted as a fuel for generators or boilers; and carbon dioxide in the exhaust gas generated by the combustion is reacted with OHMASA-GAS again in order to almost prevent newly generated carbon dioxide from exhausting into the atmosphere.

### Effects Attained by the Invention

Since carbon dioxide is able to be reduced by using carbon dioxide effectively as claimed in the present invention, it is possible to suppress the global warming. And since OHMASA-GAS is able to produce by utilizing inexpensive late-night power, the new fuel gas by the present invention is able to produce at low cost.

It is a great discovery on the global scale to discover the fact that carbon dioxide excessively exists in the atmosphere can be used in the new fuel.

### Preferred Embodiments by the Present Invention

Carbon dioxide in the atmosphere, generated by combusting substances and the like may be used as raw materials for the new fuel gas by the present invention. The carbon dioxide is not specially designated, but any ordinary carbon dioxide may be used.

However, as "oxy-hydrogen gas", the conventional oxy-hydrogen gas (which is not reactive with carbon dioxide) may not be used, but the inventor's oxy-hydrogen combined gas (namely OHMASA-GAS) obtained by the methods already protected by patent rights by the inventor (see patent references 1-3) should be used in order to react with carbon dioxide.

Hereinafter embodiments of the new fuel gas produced by reacting carbon dioxide with OHMASA-GAS and combustion test results of the new fuel gas, are explained.

### Embodiment 1

After a high pressure glass tube with a diameter of 100mm, a height of 800mm and capacity of 6.28 liter is vacuumed (gauge pressure -0.1MPa), OHMASA-GAS is filled in the high pressure glass tube up to 0.3MPa (gauge pressure), then carbon dioxide is filled in the high pressure glass tube up to 0.8MPa (gauge pressure). The gas mixture in the high pressure glass tube is compressed up to 1.5MPa (gauge pressure) by a compressor. No liquid such as waterdrops and steam are observed in the compressed high pressure glass tube, so that only gaseous substance exists in the high pressure glass tube.

### Embodiment 2

As a combustion test, the compressed gaseous substance obtained in embodiment 1 is burnt by a burner, 15 minutes after the gas mixture is compressed. In the combustion test, bluish sharp flames are observed. If the gaseous substance is merely a gas mixture consisting of OHMASA-GAS and carbon dioxide, colorless flames should be observed judging from previously performed combustion test results of OHMASA-GAS. However, in the present embodiment, since bluish sharp flames are observed when the gaseous substance obtained in embodiment 1 is burnt, it is obvious that OHMASA-GAS chemically reacts with carbon dioxide, and that a new fuel gas consisting of carbon, hydrogen and oxygen is produced as a result of the chemical reaction. Combustion temperatures of the gaseous substance are in a range of 300°C-500°C, and the combustion test is performed safely and stably.

### Embodiment 3

After a gas mixture consisting of carbon dioxide and OHMASA-GAS with mixture ratio 70:30, 50:50 or 30:70 is filled in the high pressure glass tube used in embodiment 1, the filled gas mixture is compressed up to 1MPa gauge pressure and 1.5MPa gauge pressure. No liquid such as waterdrops and steam are observed in the compressed high pressure glass tube, so that only gaseous substance exists in the glass tube.

Judging from the above mentioned observed facts, it is confirmed that no liquid substances are observed and only gaseous substance exists in the above mentioned mixture ratio range and compressed pressure range.

### Embodiment 4

Combustion tests are performed by burning the gaseous substances obtained in embodiment 3 with the burner, 15 minutes, a week or a month after the gaseous substance is produced in embodiment 3. In the combustion tests, bluish sharp flames are observed as in embodiment 2, and there are no differences in the observed facts regardless of times elapsed after the gaseous substances are produced.

### Embodiment 5

In the same conditions as in embodiment 3, a temperature of the high pressure glass tube containing gaseous substance is changed at 5°C, 15°C or 30°C. But no liquid such as waterdrops and steam are observed in the compressed high pressure glass tube, so that only gaseous substance exists in the high pressure glass tube.

### Embodiment 6

0.1-5% of fossil fuel containing propane and methane, 20-50% of carbon dioxide and the balance of OHMASA-GAS are mixed and are reacted with each other. Bluish flames are observed when the combustion test is performed on the reaction product. From the observed facts, combustion of carbon is confirmed. It is confirmed that an optimal mixture ratio is 0.5% of fossil fuel containing propane and methane, 35% of carbon dioxide and the balance of OHMASA-GAS.

In the above described embodiments, the gas mixtures are reacted in the high pressure glass tube and reaction products are stored in the high pressure glass tube. However, even when the reaction products are stored in stainless steel containers or in steel containers, the containers are stable without any changes.

### Embodiment 7

In the same way as in embodiment 3, combustion tests are performed by changing mixing ratios between carbon dioxide and OHMASA-GAS and test results are compared. As a result, optimal combustion is attained in the mixing ratio consisting of 10-50% of carbon dioxide and 90-50% of OHMASA-GAS.

Generated heat quantities in two ratios are as follows.
(1) Carbon dioxide: 20% OHMASA-GAS: 80% 44.8MJ/m³ (10,700Kcal/m³)
(2) Carbon dioxide: 40% OHMASA-GAS: 60% 43.9MJ/m³ (10,500Kcal/m³)

The heat quantities are measured by generally performed methods in gas combustions.

As described in embodiments, since it is confirmed that the new fuel gas is produced by reacting carbon oxide with OHMASA-GAS, it becomes possible to construct a carbon dioxide reduction system by combining an OHMASA-GAS production apparatus. The carbon dioxide reduction system comprises the OHMASA-GAS production apparatus and a gas mixing tank (cushion tank). The gas mixing tank receives OHMASA-GAS from the production apparatus and 10-50% of exhaust gas from gas combustion machines (engine, boiler and the like) outside, and therein the new fuel gas can be synthesized by reacting carbon dioxide with OHMASA-GAS.

Further, it is possible to synthesize the new fuel gas by blowing carbon dioxide directly onto platinum electrodes in electrolysis vessels of the OAMASA-GAS production apparatus without using the gas mixing tank, such that blowing amount of carbon dioxide is determined so as to adjust the mixing ratio consisting of 10-50% of carbon dioxide and 90-50% of OHMASA-GAS.

And further, a combustible gas or a mixture gas consisting of the combustible gas and OHMASA-GAS is combusted as a fuel for generators, boilers, cars or the like, and carbon dioxide in the exhaust gas generated by the combustion is reacted with OHMASA-GAS again so as to produce the new fuel gas, so that it is possible to construct a system which almost prevent newly generated carbon dioxide from exhausting into the atmosphere.

Thus carbon dioxide is reused and reduced by these systems mentioned above, so that inexpensive heat sources may be obtained.

### Industrial Applicability

Since the new fuel gas of the present invention obtained by reacting carbon dioxide with OHMASA-GAS is not dangerous to explode or the like, the new fuel gas may be replaced with conventionally used fossil fuels as fuels for domestic uses, cars and ships or may be widely used by mixing the fossil fuels.

## Claims

1. A method for producing a combustible gas by reacting carbon dioxide and OHMASA-GAS with a predetermined mixing ratio under a predetermined pressure at a predetermined temperature.

2. The method for producing the combustible gas according to claim 1, wherein the pressure is set in a range of 0.1MPa-10MPa.

3. The method for producing the combustible gas according to claim 1, wherein the temperature is set in a rage of 5°C-50°C.

4. The method for producing the combustible gas according to claim 1, wherein the mixing ratio is set in a range of 90%-10% of carbon dioxide and in a range of 10%-90% of OHMASA-GAS.

5. A system for recycling carbon dioxide generated by combusting the combustible gas produced by the method specified in one of claims 1-4 in producing the combustible gas specified in one of claims 1-4.

6. A new combustible gas obtained by mixing the combustible gas specified in one of claims 1-4 with a fossil fuel consisting of propane and methane with an optional mixing ratio.

7. A system comprising an OHMASA-GAS production apparatus and a mixing tank, wherein:
the mixing tank receives OHMASA-GAS from the apparatus and 10-50% of exhaust gas from gas combustion machines outside, and therein the new fuel gas can be synthesized by reacting carbon dioxide and OHMASA-GAS.

8. A system for synthesizing a combustible gas by blowing carbon dioxide directly onto platinum electrodes in electrolysis vessels of an OAMASA-GAS production apparatus.

9. A system for producing a new fuel gas, wherein:
a combustible gas or a mixture gas consisting of the combustible gas and OHMASA-GAS is combusted as a fuel for generators or boilers; and
carbon dioxide in the exhaust gas generated by the combustion is reacted with OHMASA-GAS again in order to almost prevent newly generated carbon dioxide from exhausting into the atmosphere.
